# EUROPEAN PATENT SPECIFICATION

(11) **EP 2 520 420 B1**
(45) Date of publication and mention of the grant of the patent: **24.02.2016**
(21) Application number: 12167021.0
(22) Date of filing: 07.05.2012
(51) Int. Cl.: B29D 30/52, B60C 19/08, B29C 47/04, B29C 47/06, B29D 30/06

(54) **Method and device for manufacturing an antistatic vehicle tire**
Verfahren und Vorrichtung zur Herstellung eines antistatischen Fahrzeugreifens
Procédé et dispositif de fabrication d'un pneu de véhicule antistatique

(30) Priority: 06.05.2011 NL 2006729
(43) Date of publication of application: 07.11.2012
(73) Proprietor: Apollo Tyres Global R&D B.V., 7521 PT Enschede (NL)
(72) Inventor: Greve, Cristian Bernard Maria, 7523 GW Enschede (NL); Schuring, Harm, 7535 CJ Enschede (NL)
(74) Representative: Michalski Hüttermann & Partner Patentanwälte mbB

(56) References cited:
- EP-A1- 0 548 703
- WO-A1-02/092322
- JP-A- 11 115 414
- JP-A- 2000 343 916
- JP-A- 2010 222 004
- US-A1- 2007 039 672

## Description

The present invention relates to a method of manufacturing an antistatic vehicle tire, and to a device for manufacturing such a tire.

Traditionally, carbon black has been used in tires to make them conductive and therefore antistatic. Carbon black however may cause hysteresis losses that compromise tire properties such as rolling resistance. To improve fuel economy of automobiles attempts have been made to decrease the rolling resistance of a tire. One major solution has been to use tread rubber formulations having silica as a reinforcing material at the expense of carbon black. Although tread rubbers comprising silica provide increased braking ability on wet roads and decreased rolling resistance, they are generally poorly conducting, which may lead to undesired accumulation of electrical charges on an automobile body. With poorly conducting is meant a specific electrical resistance of higher than 10⁸ Ω.cm³ after vulcanization.

Antistatic vehicle tires have been proposed that comprise a poorly conducting tread layer and a conductive tread base layer arranged underneath the tread layer, whereby the ground contacting surface is electrically connected to an underlying conductive layer, such as a tread base layer, by providing an electrical connection between the two. EP-A-0658452 for instance discloses a vehicle tire, wherein conductive inserts are provided that extend in the radial direction from the tire ground contacting surface to the underlying conductive layer of the tire to form conductive chimneys that make the electrical connection.

JP 2000343916 discloses a method for making a vehicle tire, having a poorly conducting tread layer and a conductive layer arranged underneath the tread layer. A bar-like protrusion is provided within a groove of the tread layer, whereby the tip surface of the protrusion comprises exposed conductive layer rubber.

JP 11115414 discloses a method for forming a vehicle tire, having a poorly conducting tread layer and a conductive base layer arranged underneath the tread layer. The mould seems to be provided with block-shaped recesses in which the conductive base layer rubber is collected. Block-shaped protrusions of conductive rubber are formed, which apparently are removed to expose conductive layer rubber.

JP 2010222004 discloses a method for forming an antistatic vehicle tire, comprising a poorly conducting tread layer and a conductive base layer arranged underneath the tread layer. The poorly conducting tread layer is provided with strips of conducting rubber that male contact with the conductive base layer. The conductive strips terminate at a venting hole and the conductive rubber of the channels is partly sucked up in the venting hole during molding to form a conductive protrusion.

Although some improvements in antistatic behavior are obtained in the known tire, this generally goes at the expense of other tire properties, such as rolling resistance and durability. The conductive chimneys of the tread base layer created between the ground contacting surface of the tread layer and the tire conductive base layer divide the tread layer in a number of mutually separated sections. This construction may weaken the tires and their durability is compromised, for instance because the conductive chimneys of the base layer in between the tread sections tend to separate therefrom in use.

The present invention aims to provide a method of manufacturing an antistatic vehicle tire having improved antistatic properties and durability in comparison with the known antistatic tire, and to provide a device for manufacturing such a tire.

The present invention thereto provides a method of manufacturing a vehicle tire, the tread portion of which comprises a poorly conducting tread layer that provides a ground contacting surface disposed in a radially outward part of the tread portion, and a conductive layer arranged underneath the tread layer, the method comprising providing a layered assembly of tread layer rubber and conductive layer rubber, and forming the assembly in a mould provided with a local recession in the mould surface, such that part of the assembly flows into the recession to form a protrusion comprising conductive layer rubber, and removing said protrusion to expose the conductive layer rubber, wherein the local recession in the mould surface is provided by a venting hole in the mould, and the venting hole is enlarged to such extent that part of the assembly flows into the venting hole to form the protrusion. The protrusion may comprise conductive rubber layer only but will generally comprise tread layer rubber and a core of conductive layer rubber.

The method according to the invention produces a vehicle tire with a tread portion comprising at least one conductive rubber chimney, somewhere in the circumferential direction of the tire. A conductive chimney or connection is thus obtained between the conductive layer and another layer of the tire, preferably the ground contacting surface of the tire, which connection provides enough conductivity for the tire to become antistatic to a desirable extent. It has moreover been established that one such connection per revolution of the tire may be enough to discharge any static electricity. The conductive layer may be any conductive layer underneath the tread layer, such as the tread base layer for instance, or the steel cord compound layer that is positioned below the base tread layer.

A particular advantage of the present invention is the fact that the dimensions of the conductive chimneys created between the ground contacting surface of the tread layer and the tire conductive base layer are relatively small. Weakening of the tires and their durability is therefore barely compromised.

In a preferred method according to the invention, the local recession in the mould surface faces the tread layer. In this way a direct conductive chimney or connection is formed between the conductive layer and at least the ground contacting surface of the tire. According to the invention, the local recession is shaped such that after removing said protrusion, a conductive rubber chimney is formed that at least extends between the ground contacting surface and the conductive layer, and is coextensive with the conductive layer, thereby providing a good conductivity.

A preferred embodiment of the method according to the invention provides the local recession in the mould surface in a groove of the tread portion of the tire. The tread portion of a tire generally comprises a poorly conducting tread layer that provides a ground contacting surface disposed in a radially outward part of the tread portion. To provide grip on the ground, the tread portion is provided with longitudinal (and optionally transverse) grooves. By providing the local recession in the mould surface in a groove of the tread portion of the tire, a conductive chimney is more easily formed according to the invention since the thickness of the tread rubber layer will most likely be smaller at a groove's height then elsewhere, for instance between grooves, and the conductive layer will therefore flow more easily into the recession.

The method according to the invention is characterized in that the local recession in the mould surface is provided by a venting hole in the mould, more preferably by a venting hole provided in a groove of the tread portion of the tire. Venting holes are usually provided in a mould surface in order to enable entrapped air to escape from a closed mould. A practical embodiment provides a number of bushings in a mould wall, which bushings comprise a central bore that defines the venting hole. Venting holes can be used in the context of the invention and provide the desired effect only when judicially positioned in the mould to allow conductive rubber to enter the venting hole, and - of course - when the flash obtained by the venting holes is removed to expose the conductive layer rubber. Removal of the flash may take place in use.

To increase the likelihood for conductive rubber to enter the venting hole, the invention provides a method wherein the venting hole (or venting holes) is enlarged, compared to the dimensions, known in the art. With enlarged is generally meant provided with a larger diameter. Another preferred embodiment comprises removing a number of venting hole bushes from the mould wall to define a number of recesses in the mould.

In still another preferred embodiment of the method, the local recession is formed by a division between two mould parts, which division may, preferably, be made larger than known in the art.

According to another preferred embodiment, a method is provided wherein the layered assembly of tread layer rubber and conductive layer rubber is provided by co-extruding said layer rubbers. Optionally, further conductive rubber layers may be provided by coating the co-extrusion (i.e. the co-extruded tread and conductive layers) with a conductive rubber compound or, preferably a conductive rubber solution, at the underside of the layered assembly, i.e. the side not facing the ground contacting surface of the tire. A conductive rubber compound used for the conductive layer or for the further conductive rubber layers preferably comprises a rubber polymer and an amount of carbon black that is blended with the rubber polymer in a preferred range of from 30 to 100 parts by weight per 100 parts by weight of the rubber polymer, more preferably from 40 to 80 parts by weight, even more preferably from 50 to 70 parts by weight. In addition to carbon black, the conductive rubber compound may comprise other fillers, such as silica for instance, and/or processing aids. The conductive rubber compound preferably has a specific resistance of at most 10⁶ Ω.cm³ after vulcanization, preferably at most 10⁵ Ω.cm³ after vulcanization, and most preferably at most 10⁴ Ω.cm³ after vulcanization.

The conductive rubber solution or cement preferably comprises a conductive rubber compound as described above dissolved in a suitable solvent. Preferred solvents comprise organic solvents, of which hexane, heptane, petroleum ether, tetrahydrofuran and cyclohexane (benzene) are particularly preferred. Coating may be performed by a coating process, known per se, such as those using lick rolls, brushes, spraying, and others. The conductive rubber compound (solution) is applied to a predetermined portion on the bottom surface of the co-extrusion, and the resulting conductive rubber layer dried and vulcanization-cured to obtain the conductive rubber member. In the context of the present embodiment, the further conductive rubber layer is preferably applied at a radially inward part of the tread portion, such that it is arranged underneath the tread layer.

According to the invention, part of the assembly of poorly conducting tread layer and conductive layer flows into the recession to form a protrusion comprising (a core of) conductive layer rubber. In other words, some conductive rubber should preferably flow into the recession or up to the recession, such that it is exposed after the protrusion has been removed. In order to facilitate this, a preferred embodiment of the invention provides a method wherein the radial depth of the recession is at least twice the poorly conducting tread rubber layer thickness.

In a preferred method according to the invention, the tread rubber layer in the layered assembly has a variable thickness with a smaller thickness at the position of the recession. Such a co-extrusion facilitates the flow of the conductive layer rubber into the recession.

After removal of the protrusion or protrusions, the ground contacting surface of the tread layer of the tire will comprise one or a plurality of conductive parts that may be in the form of discontinuous patches, elongated conductive members, dots, and so on.

In a preferred embodiment of the invention, a method is provided wherein the local recession is in the form of one or a plurality of grooves extending in the circumferential direction of the tire. This will produce one or a plurality of elongated conductive members, extending in the circumferential direction of the tire. In a particularly preferred embodiment, a vehicle tire is provided wherein the conductive member(s) extends substantially over the total circumference of the tire. Due to the flow of conductive rubber inside the recession(s), a conductive rubber chimney(s) is formed which is cut off to expose it to. Another preferred embodiment of the method the local recessions are in the form of one or a plurality of discontinuous grooves.

When a number of discrete protrusions are produced (by providing the mould with a plurality of discrete recesses in the form of venting holes for instance), these may vary in number in the circumferential direction of the tire, and their amount preferably ranges from 1 to 50, more preferably from 2 to 25 and most preferably from 4 to 10. In yet another preferred embodiment of the tire, such tire comprises between 1 and 200, more preferably between 8 and 100, an most preferably between 16 and 40 in total of such discrete conductive chimneys. The chimneys may be regularly disposed in the circumferential and width direction of the tire or in an irregular, and even random fashion. They are preferably provided at the grooves of the tread portion of the tire.

The total surface area of the conductive rubber parts in the ground contacting surface of the vehicle tire according to the invention preferably ranges from 0,1 to 50% of the total ground contacting surface area, more preferably from 0,5 to 25% and most preferably from 1 to 5 %. The surface area of the conductive rubber parts may be exposed at the ground contacting surface of the tread portion or, in another embodiment, may not be exposed at the ground contacting surface of the tire but at the interface surface with the conductive layer instead.

According to the invention the protrusion formed during molding of the assembly is removed or partly removed to expose the conductive core layer. Removing may be carried out by any means known is the art, such as abrasive removal, tearing, dissolution, cutting and the like. A preferred embodiment of the invention provides a method wherein removing the protrusion to expose the conductive layer rubber is carried out by cutting. This produces a sharp division between tire and protrusion(s). Although an electrical connection of relative small dimensions may hereby be provided between the ground contacting surface and the conductive layer, such a minor connection apparently and surprisingly provides enough conductivity for the tire to become antistatic to a desirable extent. By providing a chimney or a plurality of chimneys of conductive rubber of relatively small dimensions barely disrupts the integrity of the tread layer due to its small size and therefore barely affects the tire's durability. The exposed conductive rubber chimney(s) are preferably disposed in such a manner that at least some of them are within a ground contacting surface of the tread portion.

According to the present embodiment, the conductive path(s) created between the ground contacting surface of the tire and a conducting layer of the tire underneath the tread layer have a relatively small size, in particular in the circumferential and/or width direction of the tire. A preferred embodiment of a vehicle tire according to the invention comprises at least one conductive rubber chimney having a width of between 0.05 - 3.0 mm, more preferably of between 0.10 - 2.5 mm, and most preferably of between 0.15 and 2 mm.

According to the invention the conductive rubber chimneys formed during molding will generally extend inwardly in the radial direction from the tread layer towards the rim of the tire. The direction under which the chimney(s) are provided in the tire is however not limited to the radial direction (the direction perpendicular to the circumferential direction of the tire) but may include any direction with an angle to the circumferential direction of the tire. In such embodiment the conductive rubber chimneys may be disposed on a slant with the circumferential direction. Such an embodiment may for instance be achieved by providing the mould with recessions on a slant with the circumferential direction.

A preferred method according to the invention is characterized in that cutting is performed in a direction which is tangential to the ground contacting surface of the tire. In this way one or more conductive path(s) are created from the ground contacting surface of the tire to an underlying conductive layer, such as a tread base layer or a steel belt layer for instance, without impairing driving performance.

The method according to the invention is advantageous in that a precursor (the conductive layer underneath the tread layer) for the conductive rubber chimney(s) is already present in the green tire and the step of removing is the only operation that needs to be performed to produce one or more conductive path(s) and produce an antistatic tire. The method of the invention therefore allows a higher production rate and improved antistatic behavior. After the tread portion of the tire has been co-extruded and the conductive chimney(s) formed as described above, the tire is vulcanized according to well known practices.

The invention further relates to a device for carrying out the above described method. According to the invention the device comprises means for providing a layered assembly of tread layer rubber and conductive layer rubber, a mould provided with a local recession in the mould surface to form the assembly such that part of it flows into or up to the recession to form a protrusion comprising conductive layer rubber, and means for removing said protrusion to expose the conductive layer rubber, wherein the local recession in the mould surface is provided by a venting hole in the mould, wherein the venting hole is enlarged to such extent that part of the assembly flows into the venting hole to form the protrusion. The protrusion preferably comprises a core of the conductive layer rubber. A device according to the invention allows to economically manufacture an antistatic vehicle tire comprising a poorly conducting tread layer that provides a ground contacting surface disposed in a radially outward part of the tread layer, and a conductive layer arranged underneath the tread layer, the tread portion thereof comprising at least one connection or chimney of conductive rubber in the circumferential direction of the tire, which chimney extends from the ground contacting surface to the conductive layer, and is co-extensive with said conductive layer.

A preferred embodiment of the invention provides a device wherein the local recession in the mould surface faces the tread layer. In another preferred embodiment, the device further comprising a co-extruder for providing the layered assembly of tread layer rubber and conductive layer rubber. A further preferred embodiment comprises a means for coating the co-extrusion, originating from the co-extruder.

Any removing means known in the art may be used for the purpose of removing the protrusion(s) but a device, wherein the means for removing the protrusion to expose the conductive layer rubber comprise a cutting means is preferred, whereas a device, wherein the cutting means act in a direction which is tangential to the ground contacting surface of the tire is particularly preferred. A practical embodiment of the device according to the invention comprises cutting means in the form of a rotating wheel with at least one cutting tool provided along its circumference.

Other preferred embodiments of the device according to the invention comprise devices wherein the local recession is in the form of one or a plurality of grooves extending in the circumferential direction of the tire; and/or wherein the local recession is in the form of one or a plurality of discontinuous grooves. Other preferred embodiments comprise devices wherein the local recession in the mould surface is provided in a groove of the tread portion of the tire, and wherein the local recession is formed by a division between two mould parts.

The invention further relates to a vehicle tire comprising a poorly conducting tread layer that provides a ground contacting surface disposed in a radially outward part of a tread portion, and a conductive layer arranged underneath the tread layer, the tread portion comprising at least one member of conductive rubber, the member comprising at least one conductive rubber chimney that extends in the radial direction of the tire from the conductive layer to the ground contacting surface, whereby the chimney of conductive rubber is co-extensive with the conductive layer. Such a tire is obtainable by the method according to the invention.

The invention will now be further elucidated on the basis of the accompanying figures, without however being limited thereto. In the figures:
Figure 1 schematically shows a perspective view of a cross-sectional part of a tire according to an embodiment of the invention;
Figure 2A schematically shows a cross-section of the tread portion 20 of the tire of figure 1 after co-extrusion and molding into shape;
Figure 2B schematically shows a cross-section of the tread portion of figure 2A after demolding and before cutting;
Figure 2C schematically shows a cross-section of the tread portion of figure 2A after demolding and after cutting;
Figure 3A schematically shows a cross-section of the tread portion 20 of another embodiment of a tire according to the invention after co-extrusion and molding into shape;
Figure 3B schematically shows a cross-section of the tread portion of figure 3A after demolding and before cutting;
Figure 3C schematically shows a cross-section of the tread portion of figure 3A after demolding and after cutting; and
Figure 4 schematically shows a cross-section of another embodiment wherein the local recession is formed by a division between two mould parts.

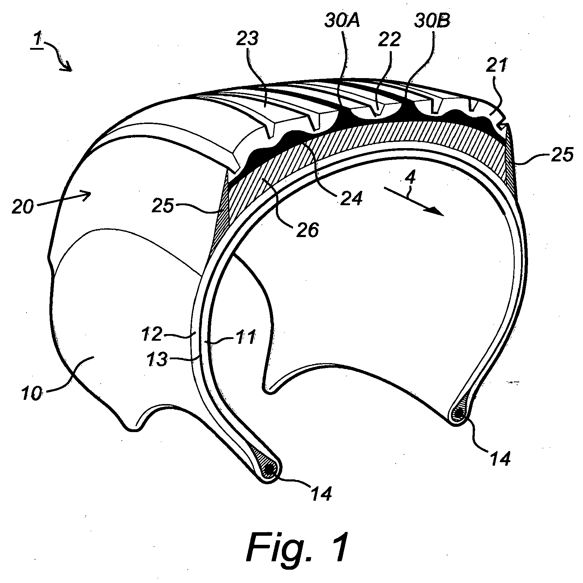

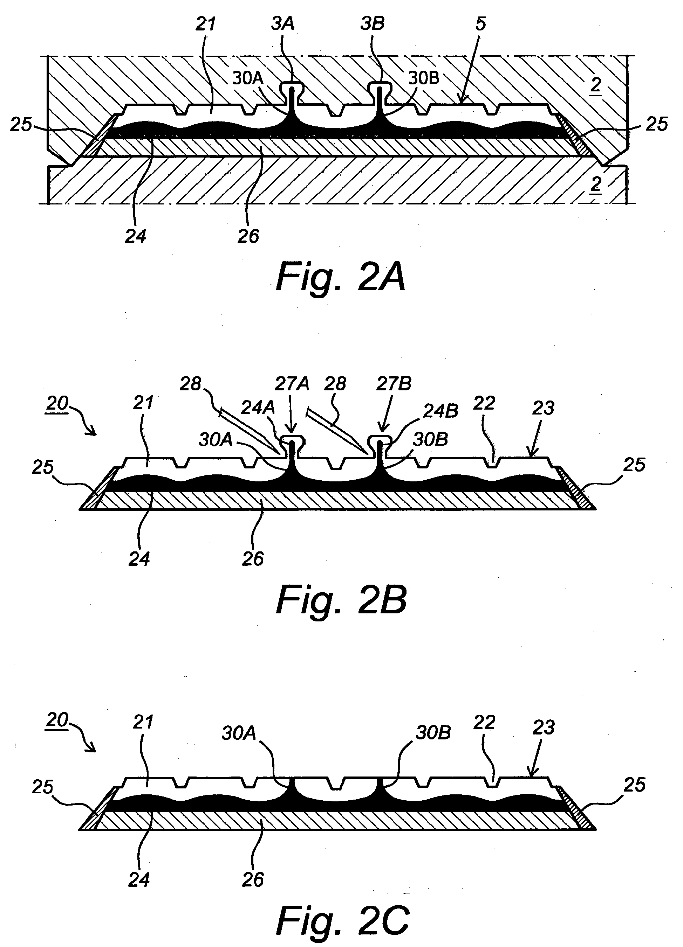

Referring to figure 1, tire 1 comprises a sidewall portion 10 of a rubber polymer and a tread portion 20 that is composed of different parts as elucidated below. The tread portion 20 of the embodiment shown comprises a poorly conducting tread layer 21 that provides a ground contacting surface 23 disposed in a radially outward part of the tread portion 20. The tread layer 21 is provided with longitudinal grooves 22 and possibly transverse grooves (not shown). The tread portion 20 further comprises a conductive tread base layer 24 arranged underneath the tread layer 21, and another optionally conductive undertread layer 26. At the sides of the tread portion 20, wing tips 25 are provided which are made of conductive rubber in the embodiment shown but may also be made of poorly conductive rubber. In the embodiment shown, sidewall portion 10 is provided with an inner layer 11 of a rubber that may differ from the rubber used in an outer coating layer 12. A carcass layer 13 of preferably steel, nylon, rayon or polyester cords is embedded in layer 12 and mechanically connected to the bead region 14. With reference to figures 2A to 2C, several steps of an embodiment of the method according to the invention are schematically shown. In a first step, a layered assembly (21, 24, 26) of at least a tread layer 21 rubber and a conductive layer 24 rubber is provided. In the embodiment shown the assembly (21, 24, 26) further comprises an undertread layer 26 rubber but this is not necessary. The layered assembly (21, 24, 26) is provided by co-extruding said layer rubbers, as is known in the art. The assembly is then formed in a mould 2. Forming the co-extruded assembly (21, 24, 26) in a mould 2 involves bringing the assembly (21, 24, 26) under pressure and a high temperature, in which process the rubber layers flow and consolidate in the mould 2 to form a molded tread portion 20. According to the invention, the mould 2 is provided with two local recessions 3A and 3B in the mould surface 5 facing the tread layer ground contacting surface 23. In the embodiment shown, the local recessions (3A, 3B) are in the form of two grooves that extend in the circumferential direction 4 (see figure 1) of the tire 1. During molding, parts of the assembly flow into the recessions (3A, 3B) to form protrusions (27A, 27B). The local recessions (3A, 3B) are shaped such (are large enough) to permit some conductive layer rubber 24 to enter the recessions (3A, 3B). In this way, the protrusions (27A, 27B) are provided with cores (24A, 24B) that comprise conductive layer rubber 24.

After demolding of the thus formed tread portion 20, said protrusions (27A, 27B) are removed by cutting them by means of cutters 28 in a direction which is about tangential to the ground contacting surface 23 of the tire 1 or tread portion 20 (figure 2B). In this way the conductive layer rubber 24 is actually exposed to the ground contacting surface 23 and two conductive rubber chimneys (30A, 30B) are formed that at least extend between the ground contacting surface 23 and the conductive layer 24, and are coextensive with the conductive layer 24, as shown in figure 2C.

The rubber composition used for the tread layer 21 of the present invention comprises fillers containing at least silica to enhance the performance of the tire when driving on wet roads in particular and provide economical rolling resistance, while the specific resistance of the rubber composition will generally be larger than 10⁸ Ω.cm³ as a result of such formulations. The rubber compounds used in other parts of the tire may be synthetic rubbers or natural rubber and blends thereof. Examples of synthetic rubbers include ethylene-propylene-diene copolymer rubber (EPDM), polyisoprene rubber (IR), polybutadiene rubber (BR), styrene-butadiene rubber (SBR), butyl rubber, and halogenated butyl rubber. Among these rubbers, SBR, such as SBR obtained by emulsion polymerization and SBR obtained by solution polymerization are preferably used.

Typical fillers used in conductive parts of the tire comprise carbon black and/or ionic salts in amounts sufficient to obtain a specific resistance lower than 10⁶ Ω.cm³.Silane coupling agent may be used if desired, as well as other ingredients generally used in the rubber industry, such as zinc oxide, stearic acid, antioxidants, wax, and vulcanizing agents, within a range such the advantages of the present invention are not adversely affected. The conductive rubber compounds used in the tire for the tread base layer 24 and/or the wing tips 25 for instance may be different or the same. The tread portion 20 may comprise further layers apart from the tread layer 21 and the tread base layer 24, such as for instance an undertread layer 26. The conductive tread base layer 24 may be any conductive layer arranged underneath the tread layer 21 and making conductive contact with other conductive parts of the tire.

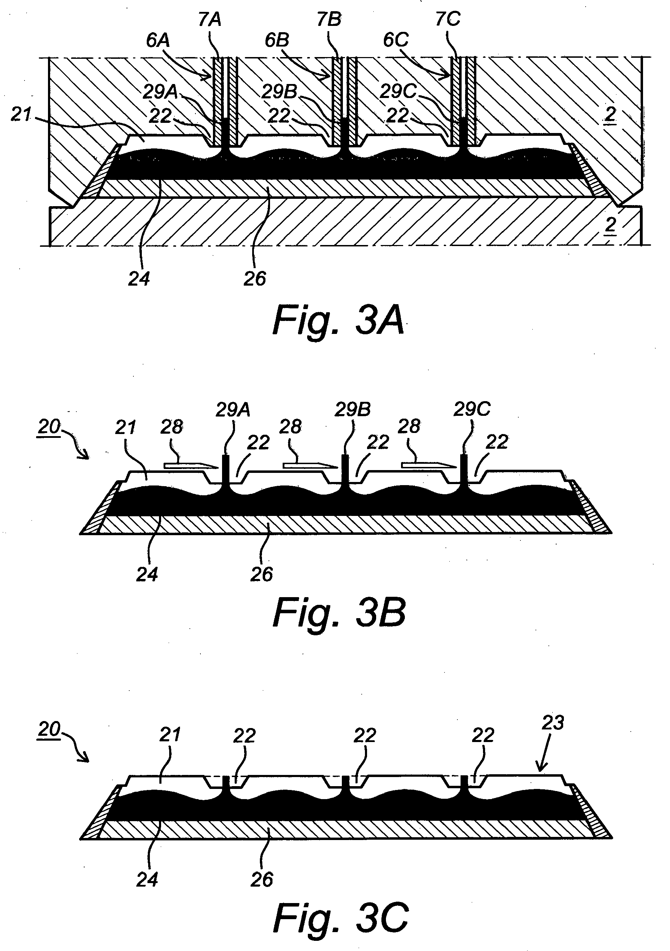

With reference to figures 3A to 3C, several steps of another embodiment of the method according to the invention are schematically shown. As with the embodiment described above, in a first step, a layered assembly (21, 24, 26) of at least a tread layer 21 rubber and a conductive layer 24 rubber is co-extruded and formed in a mould 2. Forming the co-extruded assembly (21, 24, 26) in a mould 2 involves bringing the assembly (21, 24, 26) under pressure and a high temperature, in which process the rubber layers flow and consolidate in the mould 2 to form a molded tread portion 20. According to this embodiment, the mould 2 is provided with local recessions 6A, 6B, 6C in the surface 5 facing the tread layer ground contacting surface 23, and in particular in the grooves 22 of the tread portion 20 of the tire. The grooves 22 are preferred since the thickness of tread rubber layer 21 is smaller there than in between grooves. The local recessions (6A, 6B, 6C) are provided by bushings (7A, 7B, 7C) with a central bore that define enlarged venting holes. It is also possible to remove some of the bushings 7 from the mould 2 (not shown). During molding, part of the assembly, and at least the conductive layer 24 rubber flows into the central bores of the bushings (7A, 7B, 7C) to form flash or protrusions (29A, 29B, 29C).

After demolding of the thus formed tread portion 20, the protrusions (29A, 29B, 29C) are removed by cutting them by means of cutters 28 in a direction which is about tangential to the ground contacting surface 23 of the tire 1 or tread portion 20 (figure 3B). In this way the conductive layer rubber 24 is actually exposed to the ground contacting surface 23 and conductive rubber chimneys are formed that at least extend between the ground contacting surface 23 and the conductive layer 24, and are coextensive with the conductive layer 24 (figure 3C).

In the embodiment shown in figures 3A-3C, several venting holes are used to provide conductive paths to the ground contacting surface 23. It is however possible to provide only a few of such conductive paths (one conductive contact per revolution of the tire may be enough) to provide adequate anti-static properties.

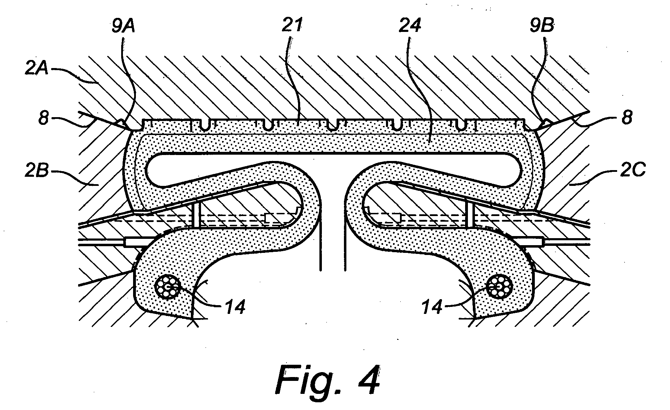

With reference to figure 4 still another embodiment is shown wherein the local recession is formed by a division between two mould parts. The tire shown is a foldable substitute tire. When stored, such a tire allows a minimum of space and weight, but when inflated provides normal rolling properties. As shown, a layered assembly (21, 24) of a tread layer 21 rubber and a conductive layer 24 rubber is co-extruded and formed in a mould 2, which comprises at least three separate parts 2A, 2B and 2C that closely fit together along mould division lines 8. To ensure that enough conductive rubber will flow into the division lines 8 small recessions 9A and 9B are formed in mould part 2A. The recessions 9A and 9B extend in the circumferential direction 4 of the tire 1. The assembly 21, 24 is brought under pressure and a high temperature, in which process the rubber layers 21, 24 flow and consolidate in the mould 2 to form a molded tire, wherein part of the assembly 21, 24 rubber has flowed into the recessions 9A, 9B to form partly conductive protrusions. As in the embodiments described above, the protrusions are removed by cutting or by other removing means to expose parts of the conductive layer rubber 24.

## Claims

1. A method of manufacturing a vehicle tire (1), the tread portion (20) of which comprises a poorly conducting tread layer (21) that provides a ground contacting surface (23) disposed in a radially outward part of the tread portion (20), and a conductive layer (24) arranged underneath the tread layer (21), the method comprising providing a layered assembly of tread layer (21) rubber and conductive layer (24) rubber, and forming the assembly (21, 24) in a mould (2) provided with a local recession (3) in the mould surface, such that part of the assembly (21, 24) flows into the recession (3) to form a protrusion (27) comprising conductive layer (24) rubber, and removing said protrusion (27) to expose the conductive layer (24) rubber, wherein the local recession in the mould surface is provided by a venting hole in the mould, and the venting hole is enlarged to such extent that part of the assembly (21, 24) flows into the venting hole to form the protrusion (27).

2. Method according to claim 1, wherein the local recession (3) in the mould surface faces the tread layer.

3. Method according to claim 1 or 2, wherein the local recession (3) in the mould surface is provided in a groove of the tread portion (20) of the tire.

4. Method according to any one of claims 1-3, wherein a mould wall is provided with a number of bushings (7A, B, C), comprising a central bore that defines the venting hole.

5. Method according to claim 4, comprising removing a number of venting hole bushings (7A, B, C) from the mould wall to define a number of recesses in the mould.

6. Method according to any one of claims 1-5, wherein the local recession (3) is formed by a division between two mould parts.

7. Method according to any one of claims 1-6, wherein the layered assembly of tread layer rubber (21) and conductive layer (24) rubber is provided by co-extruding said layer rubbers.

8. Method according to claim 7, wherein the tread rubber layer (21) in the layered assembly has a variable thickness with a smaller thickness at the position of the recession.

9. Method according to any one of the preceding claims, wherein removing the protrusion to expose the conductive layer rubber is carried out by cutting.

10. Method according to claim 9, wherein cutting is performed in a direction which is tangential to the ground contacting surface of the tire.

11. A device for manufacturing a vehicle tire comprising a poorly conducting tread layer (21) that provides a ground contacting surface (23) disposed in a radially outward part of a tread portion (20) and a conductive layer (24) arranged underneath the tread layer (21), the device comprising means for providing a layered assembly of tread layer (21) rubber and conductive layer (24) rubber, a mould provided with a local recession in the mould surface to form the assembly such that part of it flows into the recession to form a protrusion comprising conductive layer rubber, and means for removing said protrusion to expose the conductive layer rubber, **characterized in that** the local recession (3) in the mould surface is provided by a venting hole in the mould, wherein the venting hole is enlarged to such extent that part of the assembly (21, 24) flows into the venting hole to form the protrusion (27).

12. Device according to claim 11, wherein the local recession (3) in the mould surface faces the tread layer.

13. Device according to claim 11 or 12, the device further comprising a co-extruder for providing the layered assembly of tread layer rubber (21) and conductive layer rubber (24).

14. Device according to any one of claims 11-13, wherein the local recession (3) in the mould surface is provided in a groove of the tread portion (20) of the tire.

15. Device according to any one of claims 11-14, wherein a mould wall is provided with a number of bushings (7A, B, C), comprising a central bore that defines the venting hole.

16. Device according to any one of claims 11-15, wherein the local recession (3) is formed by a division between two mould parts.

17. Device according to any one of claims 11-16, wherein the means for removing the protrusion (7A, B, C) to expose the conductive layer rubber comprise a cutting means.

18. Device according to claim 17, wherein the cutting means act in a direction which is tangential to the ground contacting surface of the tire.

## Patentansprüche

1. Verfahren zum Herstellen eines Fahrzeugreifens (1), dessen Laufflächenabschnitt (20) eine Laufflächenschicht (21) mit schlechter Leitfähigkeit, die eine in einem radial äußeren Teil des Laufflächenabschnitts (20) angeordnete Bodenkontaktfläche (23) bereitstellt, und eine unter der Laufflächenschicht (21) angeordnete leitfähige Schicht (24) aufweist,
wobei das Verfahren die Schritte aufweist:
Bereitstellen einer schichtförmigen Anordnung aus Gummi der Laufflächenschicht (21) und Gummi der leitfähigen Schicht (24);
Formen der Anordnung (21, 24) in einer Form (2), die eine lokale Vertiefung (3) in der Formoberfläche aufweist, so dass ein Teil der Anordnung (21, 24) in die Vertiefung (3) fließt, um einen Vorsprung (27) zu bilden, der Gummi der leitfähigen Schicht (24) aufweist; und
Entfernen des Vorsprungs (27) zum Freilegen des Gummis der leitfähigen Schicht (24), wobei die lokale Vertiefung in der Formoberfläche durch ein Entlüftungsloch in der Form bereitgestellt wird, und wobei das Entlüftungsloch in einem derartigen Maß erweitert ist, dass ein Teil der Anordnung (21, 24) in das Entlüftungsloch fließt, um den Vorsprung (27) zu bilden.

2. Verfahren nach Anspruch 1, wobei die lokale Vertiefung (3) in der Formoberfläche der Laufflächenschicht zugewandt ist.

3. Verfahren nach Anspruch 1 oder 2, wobei die lokale Vertiefung (3) in der Formoberfläche in einer Rille des Laufflächenabschnitts (20) des Reifens angeordnet ist.

4. Verfahren nach einem der Ansprüche 1 bis 3, wobei in einer Formenwand mehrere Buchsen (7A, B, C) bereitgestellt werden, die eine das Entlüftungsloch definierende Mittelöffnung aufweisen.

5. Verfahren nach Anspruch 4, mit dem Schritt zum Entfernen mehrerer Entlüftungslochbuchsen (7A, B, C) von der Formenwand zum Definieren mehrerer Vertiefungen in der Form.

6. Verfahren nach einem der Ansprüche 1 bis 5, wobei die lokale Vertiefung (3) durch eine Teilung zwischen zwei Formteilen gebildet wird.

7. Verfahren nach einem der Ansprüche 1 bis 6, wobei die schichtförmige Anordnung aus dem Gummi der Laufflächenschicht (21) und dem Gummi der leitfähigen Schicht (24) durch Co-Extrusion der schichtförmig angeordneten Gummis bereitgestellt wird.

8. Verfahren nach Anspruch 7, wobei das Gummi der Laufflächenschicht (21) in der schichtförmigen Anordnung eine variable Dicke hat, wobei die Dicke an der Position der Vertiefung kleiner ist.

9. Verfahren nach einem der vorangehenden Ansprüche, wobei das Entfernen des Vorsprungs zum Freilegen des Gummis der leitfähigen Schicht durch Schneiden ausgeführt wird.

10. Verfahren nach Anspruch 9, wobei das Schneiden in einer sich tangential zur Bodenkontaktfläche des Reifens erstreckenden Richtung ausgeführt wird.

11. Vorrichtung zum Herstellen eines Fahrzeugreifens mit einer Laufflächenschicht (21) mit einer schlechten Leitfähigkeit, die eine in einem radial äußeren Teil eines Laufflächenabschnitts (20) angeordnete Bodenkontaktfläche (23) bereitstellt, und einer unter der Laufflächenschicht (21) angeordneten leitfähigen Schicht (24), wobei die Vorrichtung aufweist:
eine Einrichtung zum Bereitstellen einer schichtförmigen Anordnung aus Gummi der Laufflächenschicht (21) und Gummi der leitfähigen Schicht (24);
eine Form mit einer lokalen Vertiefung in der Formoberfläche zum Formen der Anordnung derart, dass ein Teil der Anordnung in die Vertiefung fließt, um einen Vorsprung zu bilden, der Gummi der leitfähigen Schicht (24) aufweist; und
eine Einrichtung zum Entfernen des Vorsprungs zum Freilegen des Gummis der leitfähigen Schicht;
**dadurch gekennzeichnet, dass**
die lokale Vertiefung (3) in der Formoberfläche durch ein Entlüftungsloch in der Form bereitgestellt wird, und wobei das Entlüftungsloch in einem derartigen Maß erweitert ist, dass der Teil der Anordnung (21, 24) in das Entlüftungsloch fließt, um den Vorsprung (27) zu bilden.

12. Vorrichtung nach Anspruch 11, wobei die lokale Vertiefung (3) in der Formoberfläche der Laufflächenschicht zugewandt ist.

13. Vorrichtung nach Anspruch 11 oder 12, wobei die Vorrichtung ferner einen Co-Extruder zum Bereitstellen der schichtförmigen Anordnung aus dem Gummi der Laufflächenschicht (21) und dem Gummi der leitfähigen Schicht (24) aufweist.

14. Vorrichtung nach einem der Ansprüche 11 bis 13, wobei die lokale Vertiefung (3) in der Formoberfläche in einer Rille des Laufflächenabschnitts (20) des Reifens angeordnet ist.

15. Vorrichtung nach einem der Ansprüche 11 bis 14, wobei in einer Formenwand mehrere Buchsen (7A, B, C) bereitgestellt werden, die eine das Entlüftungsloch definierende Mittelöffnung aufweisen.

16. Vorrichtung nach einem der Ansprüche 11 bis 15, wobei die lokale Vertiefung (3) durch eine Teilung zwischen zwei Formenteilen gebildet wird.

17. Vorrichtung nach einem der Ansprüche 11 bis 16, wobei die Einrichtung zum Entfernen des Vorsprungs (7A, B, C) zum Freilegen des Gummis der leitfähigen Schicht eine Schneideinrichtung aufweist.

18. Vorrichtung nach Anspruch 17, wobei die Schneideinrichtung in eine sich tangential zur Bodenkontaktfläche des Reifens erstreckende Richtung wirkt.

## Revendications

1. Procédé de fabrication d'un pneumatique de véhicule (1), la partie de bande de roulement (20) de celui-ci comprenant une couche de bande de roulement faiblement conductrice (21) qui fournit une surface de contact avec le sol (23) disposée dans une partie radialement vers l'extérieur de la partie de bande de roulement (20), et une couche conductrice (24) disposée sous la couche de bande de roulement (21), le procédé comprenant la fourniture d'un assemblage en couches de la couche de bande de roulement (21) en caoutchouc et la couche conductrice (24) en caoutchouc, et la formation de l'assemblage (21, 24) dans un moule (2) pourvu d'une récession locale (3) à la surface du moule, de sorte qu'une partie de l'assemblage (21, 24) se déverse dans la récession (3) pour former une saillie (27) comprenant la couche conductrice (24) en caoutchouc, et la suppression de ladite saillie (27) pour exposer la couche conductrice (24) en caoutchouc, dans lequel la récession locale à la surface du moule est fournie par un trou d'évacuation dans le moule, et le trou d'évacuation est agrandi d'une certaine mesure de sorte qu'une partie de l'assemblage (21, 24) se déverse dans le trou d'évacuation pour former la saillie (27).

2. Procédé selon la revendication 1, dans lequel la récession locale (3) à la surface du moule fait face à la couche de bande de roulement.

3. Procédé selon la revendication 1 ou la revendication 2, dans lequel la récession locale (3) à la surface du moule est pourvue d'une rainure dans la partie de bande de roulement (20) du pneumatique.

4. Procédé selon l'une quelconque des revendications 1-3, dans lequel une paroi du moule est pourvue d'un certain nombre de douilles (7A, B, C), comprenant un alésage central qui définit le trou d'évacuation.

5. Procédé selon la revendication 4, comprenant la suppression d'un certain nombre de douilles de trou d'évacuation (7A, B, C) de la paroi du moule pour définir un certain nombre de cavités dans le moule.

6. Procédé selon l'une quelconque des revendications 1-5, dans lequel la récession locale (3) est formée par une division entre deux parties du moule.

7. Procédé selon l'une quelconque des revendications 1-6, dans lequel l'assemblage en couches de la couche de bande de roulement en caoutchouc (21) et la couche conductrice (24) en caoutchouc est fourni par co-extrusion desdites couches de caoutchouc.

8. Procédé selon la revendication 7, dans lequel la couche de bande de roulement en caoutchouc (21) dans l'assemblage en couches possède une épaisseur variable avec une épaisseur inférieure à la position de la récession.

9. Procédé selon l'une quelconque des revendications précédentes, dans lequel la suppression de la saillie pour exposer la couche conductrice en caoutchouc est réalisée par coupe.

10. Procédé selon la revendication 9, dans lequel la coupe est réalisée dans une direction qui est tangentielle à la surface de contact avec le sol du pneumatique.

11. Dispositif de fabrication d'un pneumatique de véhicule comprenant une couche de bande de roulement faiblement conductrice (21) qui fournit une surface de contact avec le sol (23) disposée dans une partie radialement vers l'extérieur d'une partie de bande de roulement (20) et une couche conductrice (24) disposée sous la couche de bande de roulement (21), le dispositif comprenant des moyens pour la fourniture d'un assemblage en couches de la couche de bande de roulement (21) en caoutchouc et la couche conductrice (24) en caoutchouc, un moule pourvu d'une récession locale à la surface du moule pour former l'assemblage de sorte qu'une partie de celui-ci se déverse dans la récession pour former une saillie comprenant la couche conductrice en caoutchouc, et des moyens pour la suppression de ladite saillie pour exposer la couche conductrice en caoutchouc, **caractérisé en ce que** la récession locale (3) à la surface du moule est fournie par un trou d'évacuation dans le moule, dans lequel le trou d'évacuation est agrandi d'une certaine mesure de sorte qu'une partie de l'assemblage (21, 24) se déverse dans le trou d'évacuation pour former la saillie (27).

12. Dispositif selon la revendication 11, dans lequel la récession locale (3) à la surface du moule fait face à la couche de bande de roulement.

13. Dispositif selon la revendication 11 ou la revendication 12, le dispositif comprenant en outre une co-extrudeuse pour fournir l'assemblage en couches de la couche de bande de roulement en caoutchouc (21) et la couche conductrice en caoutchouc (24).

14. Dispositif selon l'une quelconque des revendications 11-13, dans lequel la récession locale (3) à la surface du moule est pourvue dans une rainure de la partie de bande de roulement (20) du pneumatique.

15. Dispositif selon l'une quelconque des revendications 11-14, dans lequel une paroi du moule est pourvue d'un certain nombre de douilles (7A, B, C), comprenant un alésage central qui définit le trou d'évacuation.

16. Dispositif selon l'une quelconque des revendications 11-15, dans lequel la récession locale (3) est formée par une division entre deux parties du moule.

17. Dispositif selon l'une quelconque des revendications 11-16, dans lequel les moyens de suppression de la saillie (7A, B, C) pour exposer la couche conductrice en caoutchouc comprennent des moyens de coupe.

18. Dispositif selon la revendication 17, dans lequel les moyens de coupe agissent dans une direction qui est tangentielle à la surface de contact avec le sol du pneumatique.
